Europäisches Patentamt

European Patent Office

Office européen des brevets

(19)

(11) Veröffentlichungsnummer: **0 230 626**
**B1**

(12) # EUROPÄISCHE PATENTSCHRIFT

(45) Veröffentlichungstag der Patentschrift:
26.04.89

(51) Int. Cl.⁴: **F16F 15/03, B60G 17/00**

(21) Anmeldenummer: **86117712.9**

(22) Anmeldetag: **19.12.86**

(54) Vorrichtung zur Verstellung der Federsteifigkeit einer Magnetfeder.

(30) Priorität: **29.01.86 DE 3602599**

(43) Veröffentlichungstag der Anmeldung:
**05.08.87 Patentblatt 87/32**

(45) Bekanntmachung des Hinweises auf die Patenterteilung:
**26.04.89 Patentblatt 89/17**

(84) Benannte Vertragsstaaten:
**DE FR GB IT SE**

(56) Entgegenhaltungen:
**EP-A- 0 127 741**
**DE-A- 1 805 789**

(73) Patentinhaber: **ROBERT BOSCH GMBH, Postfach 50, D-7000 Stuttgart 1(DE)**

(72) Erfinder: **Müller, Hans-Georg, Dr. Dipl.-Ing., Lerchenweg 7, D-7251 Weissach(DE)**

ACTORUM AG

## Beschreibung

### Stand der Technik

Die Erfindung geht aus von einer Vorrichtung zur Verstellung der Federsteifigkeit einer Magnetfeder nach der Gattung des Hauptanspruchs. Eine Magnetfeder ist bekannt aus der DE-AS 1 805 789, in der sie als Bestandteil eines nichtlinearen Federsystems, das aus der Parallelschaltung einer Feder mit linearer Kennlinie und der Magnetfeder mit nichtlinearer Kennlinie besteht. Eine einfache Veränderbarkeit der Kennliniensteilheit des Federsystems soll durch die Veränderung der Federsteifigkeit der Magnetfeder möglich sein. Hierzu wird vorgeschlagen, den Abstand der Ringmagnete zu verändern, den Luftspalt zu verändern oder auch den magnetischen Widerstand der Magnetpfade zu ändern. Es ist jedoch nicht darauf hingewiesen, wie wenigstens einer dieser drei Vorschläge in die Praxis umgesetzt werden kann.

In der DE-OS 3 410 473 ist ebenfalls eine Magnetfeder beschrieben, die Teil eines nichtlinearen Federsystems ist. In dieser Druckschrift ist eine konstruktive Lösung zur Veränderung der Federsteifigkeit der Magnetfeder angegeben. Eine erste Lösung bezieht sich auf eine Ringfeder, die aus zwei konzentrischen, identischen Ringen aufgebaut ist, die sich um eine gemeinsame Drehachse gegeneinander verdrehen können. Der Abstand der Ringe kann in Richtung der Drehachse durch eine Einrichtung verstellt werden, womit eine Veränderung der Federsteifigkeit durch Veränderung des Luftspaltes realisiert ist. Die zweite Möglichkeit bezieht sich auf eine Koaxial-Magnetfeder, deren Arbeitshub durch eine lineare Bewegung gegeben ist. Die beiden koaxialen Ringe der Magnetfeder werden in Segmente aufgeteilt, die abwechselnd aus magnetischem und nichtmagnetischem Material bestehen. Werden die Ringe gegeneinander verdreht, so kann die resultierende Magnetkraft zwischen einem Maximalwert und einem Minimalwert kontinuierlich verändert werden. Der Maximalwert stellt sich dann ein, wenn sich die magnetischen Segmente des Innen- und Außenrings gegenüberstehen. Der Minimalwert ergibt sich dann, wenn jeweils einem magnetischen Segment ein unmagnetisches Segment gegenübersteht.

Ein Nachteil der ersten Anordnung ist, daß sie nur für Drehfedern geeignet ist und daß sich das Volumen der Feder ändert.

Ein Nachteil der zweiten Anordnung ist, daß nur ein Teil der Ringe mit magnetischem Material belegt ist und damit die Magnetkräfte gegenüber einer Anordnung kleiner werden, bei der beide Ringe vollständig aus magnetischem Material sind. Durch die Vorrichtung zur Veränderung der Federsteifigkeit werden die Abmessungen und damit Gewicht und Volumen der Magnetfeder mit Segmenten gegenüber einer Magnetfeder ohne Segmente, bei vorgegebener Magnetkraft größer.

### Vorteile der Erfindung

Die erfindungsgemäße Vorrichtung zur Verstellung der Federsteifigkeit einer Magnetfeder weist demgegenüber den Vorteil auf, daß die Abmessungen der Magnetfeder mit variabler Federsteifigkeit nicht wesentlich größer sind als bei einer Magnetfeder mit konstanter Federsteifigkeit und daß sich das Volumen der Magnetfeder bei Verstellung der Federsteifigkeit nicht ändert. Ausgegangen wird dabei von der bekannten Tatsache, daß durch Anbringen eines magnetischen Kurzschlußringes am äußeren Umfang oder am inneren Umfang einer zylindrischen Magnetfeder der Feldlinienverlauf und damit die resultierende Kraft verändert wird. Hierzu wird um den äußeren oder den inneren Magnetring ein Zylinder aus nichtmagnetischem Material angeordnet, in welchem ein oder mehrere magnetisierbare Körper mittels eines drehbaren Ringes derart geführt werden, daß sie zwischen einer ersten Stellung, in der sie soweit von dem äußeren oder inneren Magnetring entfernt sind, daß keine magnetische Kurzschlußwirkung mehr auftritt, und einer zweiten Stellung, in der sie direkt am Umfang des äußeren bzw. des inneren Ringes liegen, jede beliebige Zwischenstellung einnehmen können. Besonders vorteilhaft ist es, daß sich damit eine kontinuierliche Veränderung der Federsteifigkeit erzielen läßt.

Durch die in den übrigen Unteransprüchen aufgeführten Maßnahmen sind vorteilhafte Weiterbildungen der Vorrichtung möglich. Die besonders zweckmäßige Konstruktion des Zylinders und des drehbaren Ringes ergibt eine gleichmäßige Veränderung der Feldlinien über die gesamte Länge der Magnetfeder, so daß der nahezu lineare Verlauf der resultierenden Federkraft im Arbeitsbereich auch dann erhalten bleibt, wenn die Federsteifigkeit verändert wird. Dies wird erreicht durch zwei oder mehr in regelmäßigen Abständen im Zylinder befindliche Führungen, in welchen jeweils ein oder mehrere magnetisierbare Körper angeordnet sind. Die magnetisierbaren Körper sind zweckmäßigerweise als miteinander verbundene Rollen realisiert, die an Führungselementen des drehbaren Ringes befestigt sind. Somit ist eine Zieh- und Schiebebewegung möglich. Die Rollenform unterstützt eine schnelle Veränderungsgeschwindigkeit der Federsteifigkeit, die in einigen Anwendungsfällen wie z.B. bei adaptiven Federungssystemen in Kraftfahrzeugen auftreten können.

Eine weitere Anwendungsmöglichkeit der Magnetfeder mit variabler Federsteifigkeit ist als Bestandteil eines Federungssystemes für Präzisionsmeßtische gegeben.

Besonders geeignet ist sie für die Reduzierung der Rüttelkräfte, die während des Schleudervorganges bei Waschmaschinen oder Wäscheschleudern auftreten. In dieser Anwendung ist die variable Federsteifigkeit dann von besonderem Vorteil, wenn zunächst die Wäsche gewogen werden soll und anschließend im Schleudervorgang eine optimale Abfederung gewährleistet sein soll.

Weitere Einzelheiten und vorteilhafte Weiterbildungen der erfindungsgemäßen Vorrichtung ergeben sich aus der folgenden Beschreibung eines Ausführungsbeispieles.

## Zeichnung

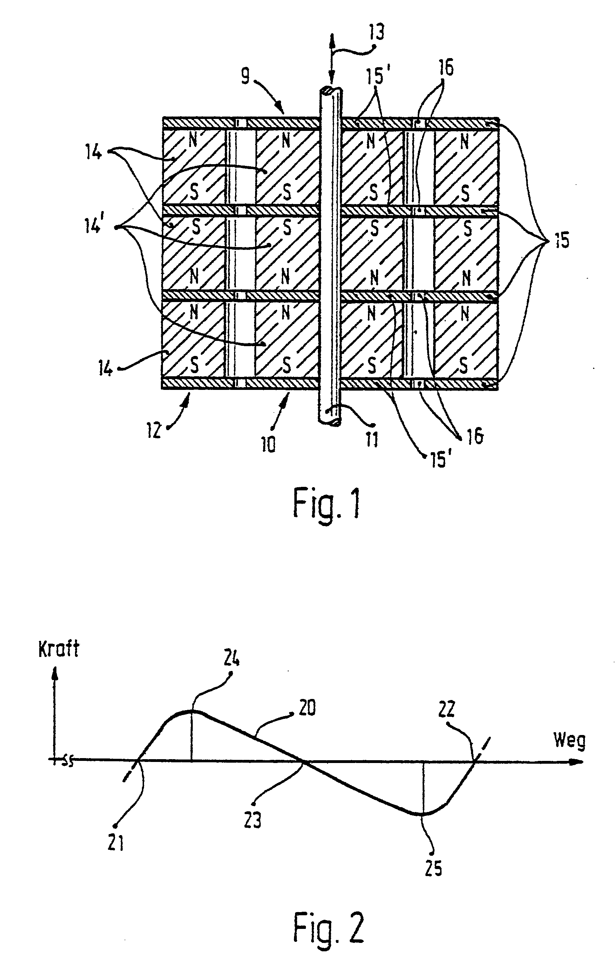

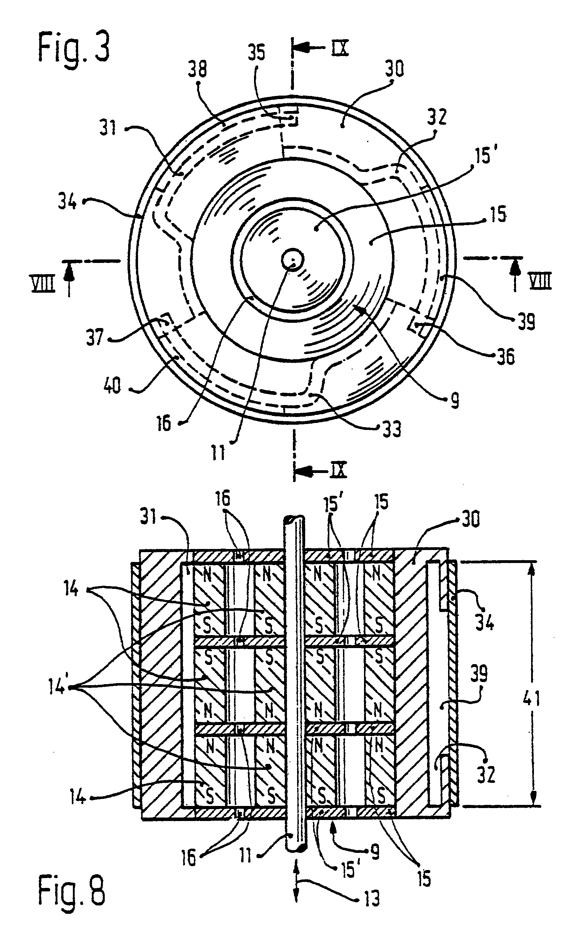

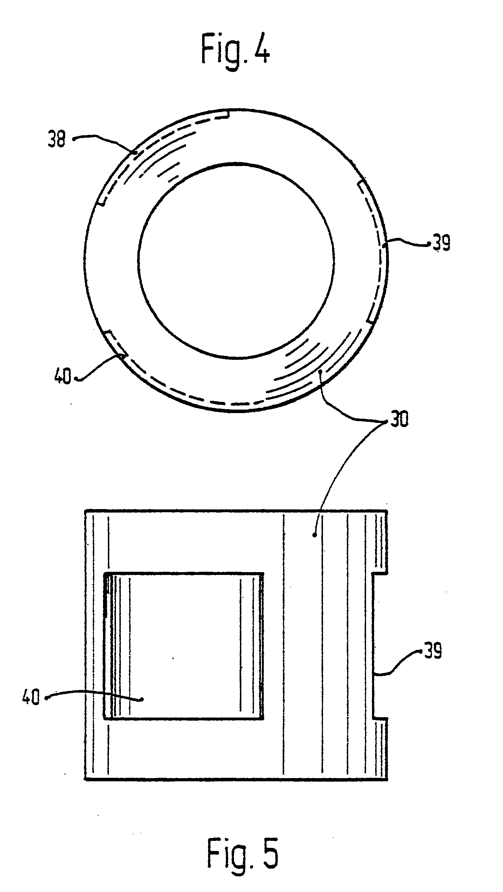

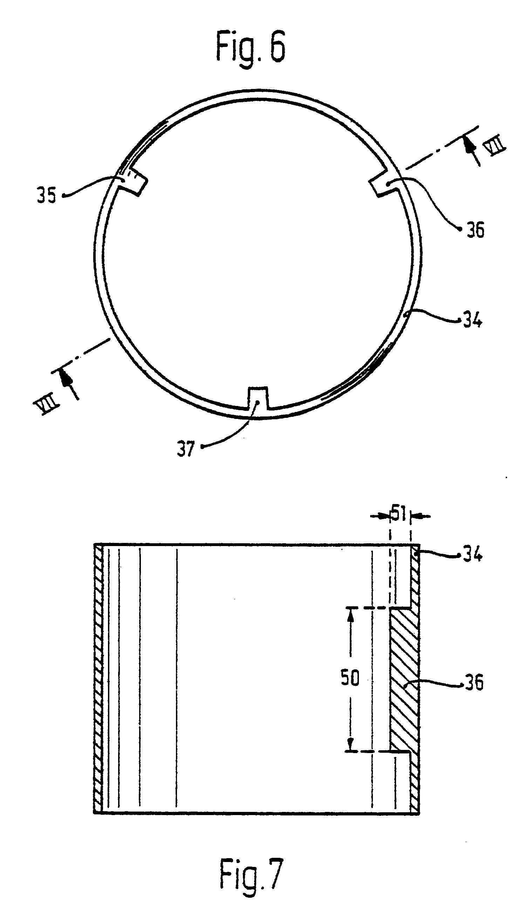

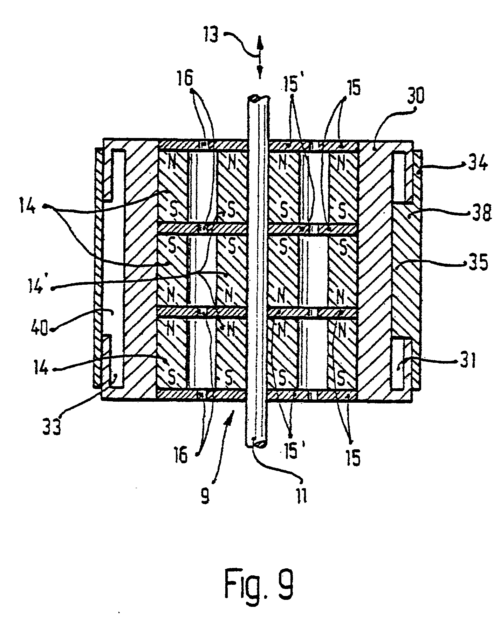

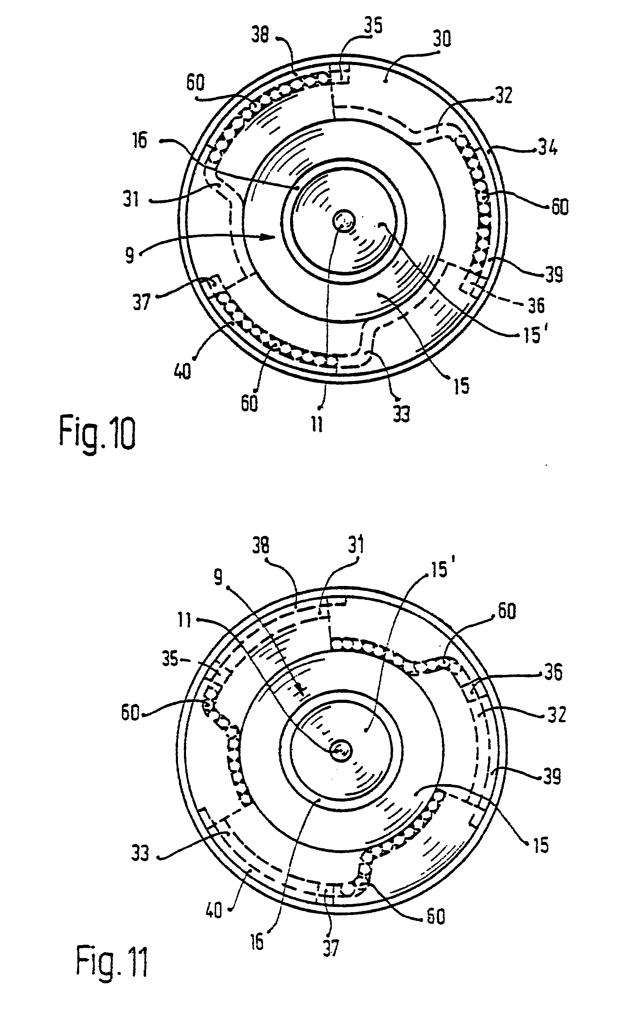

Die Erfindung wird anhand der Zeichnung weiter verdeutlicht. Es zeigen Figur 1 den prinzipiellen Aufbau einer Magnetfeder, Figur 2 ein Kraft-Weg-Diagramm einer Magnetfeder, Figur 3 eine Draufsicht auf eine Magnetfeder mit der erfindungsgemäßen Vorrichtung zur Verstellung der Federsteifigkeit, Figur 4 eine Draufsicht auf einen Zylinder, Figur 5 eine Vorderansicht des Zylinders gemäß Figur 4, Figur 6 eine Draufsicht auf einen drehbaren Ring, Figur 7 ein Schnittbild durch einen drehbaren Ring gemäß der Linie VII–VII in Figur 6, Figur 8 ein Schnittbild durch die Gesamtanordnung gemäß der Linie VIII–VIII in Figur 3, Figur 9 ein Schnittbild der Gesamtanordnung gemäß der Linie IX–IX in Figur 3, Figur 10 eine erste Stellung von magnetisierbaren Körpern und Figur 11 eine zweite Stellung von magnetisierbaren Körpern.

## Beschreibung des Ausführungsbeispiels

Figur 1 zeigt den prinzipiellen Aufbau einer Koaxial-Magnetfeder 9. Sie besteht aus einer inneren Baugruppe 10, die mit einer Achse 11 eine Einheit bildet und aus einer äußeren Baugruppe 12. Es handelt sich um einen rotationssymmetrischen Aufbau. Die innere Baugruppe 10 ist beispielsweise mit einer nicht gezeigten abzufedernden Masse und die äußere Baugruppe 12 mit einer ungefederten Masse verbunden bzw. umgekehrt. Die innere und äußere Baugruppe 10, 12 besteht aus mehreren in Bewegungsrichtung 13 hintereinander geschalteten Permanentmagneten 14, 14' die als Magnetsegmente oder Ringmagnete ausgebildet sind und die angegebene Magnetisierung aufweisen. Die Permanentmagnetringe 14, 14' sind durch Weicheisenzwischenstücke 15, 15' voneinander getrennt. Die Magnetisierungsachsen der Ringmagnete 14, 14' sind parallel zur Bewegungsrichtung 13 angeordnet. Die Pole der Ringmagneten 14, 14' sind so angeordnet, daß jeweils zwei aufeinanderfolgende Ringmagnete 14, 14' mit den gleichnamigen Polen einander zugekehrt an das jeweilige Weicheisenzwischenstück 15, 15' angrenzen. Der Aufbau der äußeren Baugruppe 12 entspricht demjenigen der inneren Baugruppe 10. Die in Figur 1 gezeigte Position der inneren Baugruppe 10 gegenüber der äußeren Baugruppe 12 entspricht der labilen Gleichgewichtslage der Magnetfeder, bei der sich die Weicheisenzwischenstücke 15, 15' und gleichnamige Pole der beiden Baugruppen 10, 12 relativ zur Bewegungsrichtung 13 in gleicher Höhe gegenüberstehen.

Ein Kraft-Weg-Diagramm einer solchen Magnetfeder 9 ist auszugsweise in Figur 2 gezeigt. Die Kennlinie 20 der Magnetfeder 9 ist nichtlinear. Sie besitzt wenigstens einen Nulldurchgang 23, welcher der in Figur 1 gezeigten labilen Gleichgewichtslage entspricht, und der in der Mitte zwischen einem positiven Maximum 24 und einem negativen Maximum 25 liegt. Gegenbenenfalls treten paarweise weitere Nulldurchgänge 21, 22 in Abhängigkeit von der Ausführungsform der Magnetfeder 9 auf. Im Bereich zwischen den beiden Extremwerten 24, 25 liegt eine negative Steifigkeit vor, deren Betrag durch die Steigung der Kennlinie 20 gegeben ist.

Figur 3 zeigt eine Draufsicht der Gesamtanordnung der Magnetfeder 9, an deren Außenumfang ein Zylinder 30 befestigt ist, der drei Führungen 31 bis 33 aufweist. Der Zylinder 30 ist von einem drehbaren Ring 34 umgeben. Er weist drei Vorsprünge 35 bis 37 auf, die in drei Durchbrüche 38 bis 40 im Zylinder 30 eingreifen.

Diese Durchbrüche 38 bis 40 im Zylinder 30 sind in Figur 4 in der Draufsicht und in Figur 5 in einer Vorderansicht dargestellt. Die Führungen 31 bis 33 sind bei den Figuren 4 und 5 nicht eingezeichnet. Die Vorderansicht in Figur 5 enthält nur sichtbare Linien.

Figur 6 zeigt eine Draufsicht auf den verdrehbaren Ring 34, der die Vorsprünge 35 bis 37 aufweist, die in regelmäßigen Abständen am Umfang verteilt sind.

Figur 7 zeigt ein Schnittbild des drehbaren Ringes 34 gemäß der Schnittlinie VII–VII in Figur 6. Die Höhe 50 und die Breite 51 der Vorsprünge 35 bis 37 sind so bemessen, daß sie genau in die entsprechenden Durchbrüche 38 bis 40 im Zylinder 30 eingreifen können.

Die Figuren 8 und 9 zeigen jeweils ein Schnittbild gemäß der Schnittlinie VIII–VIII bzw. IX–IX in Figur 3. In Figur 8 sieht man auf der rechten Seite eine Führung 32 im Zylinder 30, die sich in größerem Abstand zur Magnetfeder 9 befindet und auf der linken Seite eine Führung 31 im Zylinder 30, die unmittelbar der Magnetfeder 9 benachbart ist.

In der Figur 9 ist auf der linken Seite wieder eine Führung 33 im Zylinder 30 gezeigt, die sich in größerem Abstand zur Magnetfeder 9 befindet. Auf der rechten Seite sieht man, wie ein Vorsprung 35 am drehbaren Ring 34 in einen Durchbruch 38 im Zylinder 30 eingreift und eine Führung 31 ausfüllt.

In Figur 10 ist eine erste Stellung der erfindungsgemäßen Vorrichtung in Draufsicht gezeigt. In den Führungen 31 bis 33 im Zylinder 30 ist magnetisierbares Material 60 angeordnet. Das Material 60 sind hier weichmagnetische Metallrollen. Die Anzahl der Rollen 60 ist so bemessen, daß in der gezeigten ersten Stellung 61 in den drei Führungen 31 bis 33 alle Rollen weitestmöglichst von der Magnetfeder 9 entfernt sind.

In Figur 11 ist eine zweite Stellung der erfindungsgemäßen Vorrichtung in Draufsicht gezeigt. Alle Rollen 60 in den drei Führungen 31 bis 33 befinden sich so nahe wie möglich am Außenumfang der Magnetfeder 9.

Die in der Figur 1 gezeigte Koaxial-Magnetfeder 9 weist die rotationssymmetrische innere Baugruppe 10 und äußere Baugruppe 12 auf, die durch ringförmige Luftspalte 16 voneinander getrennt sind. Die innere Baugruppe 10 ist beispielsweise mit einer nicht gezeigten gefederten Masse und der äußere Teil 12 mit der ungefederten Masse verbunden bzw. umgekehrt. Beide Baugruppen 10, 12 bestehen aus mehreren in Bewegungsrichtung 13 hintereinander geschalteten Permanentmagneten 14, 14', welche die angegebene Magnetisierung aufweisen. Es können Ringmagnete oder Magnetsegmente verwendet werden. Die einzelnen Ringmagnete 14, 14' sowohl der inneren Baugruppe 10 als auch der äußeren Baugruppe 12 sind durch Weicheisenzwischenstücke 15, 15' voneinander getrennt. Auch diese Weicheisenzwischenstücke 15, 15' können Segmente sein, deren Größe derjenigen der Magnetsegmente entspricht, oder es können Metallringe sein. Die magnetisierbaren Achsen der Ringmagnete 14, 14' sind derart parallel zur Bewegungsrichtung 13 angeordnet, daß jeweils zwei aufeinanderfolgende Ringmagnete 14, 14' mit den gleichnamigen Polen einander zugekehrt an das jeweilige Weicheisenzwischenstück 15, 15' angrenzen. Die in der Figur 1 gezeigte Position der inneren Baugruppe 10 gegenüber der äußeren Baugruppe 12 entspricht der labilen Gleichgewichtslage der Magnetfeder 9. Die Weicheisenzwischenstücke 15, 15' der inneren und äußeren Baugruppe 10, 12 stehen sich genau gegenüber und es befinden sich dort gleichnamige Pole der inneren und äußeren Ringmagnete 14, 14'. Die Aufgabe der Weicheisenzwischenstücke 15, 15' ist es, das Magnetfeld der Ringmagnete 14, 14' in den Luftraum zwischen innerer und äußerer Baugruppe 10, 12 zu führen, und das Streufeld außerhalb der Magnetfeder 9 möglichst gering zu halten, da dieses Streufeld die wirksame Magnetkraft herabsetzt.

Die Magnetfeder 9 hat eine nichtlineare Kraft-Weg-Kennlinie, die in Figur 2 dargestellt ist. Die nichtlineare Kennlinie 20 weist einen Nulldurchgang 23 auf, der der in Figur 1 gezeigten labilen Gleichgewichtslage entspricht. In der Umgebung des Nulldurchganges 23 befindet sich ein nahezu linearer Abschnitt mit negativer Federsteifigkeit, der durch das positive Maximum 24 und das negative Maximum 25 begrenzt wird. Eine Auslenkung der Magnetfeder 9 über diese beiden Punkte 24, 25 in die eine bzw. in die andere Richtung hinaus, kann nur durch Arbeit gegen die Kraft der Magnetfeder erfolgen. In diesen Bereichen weist die Magnetfeder 9 eine positive Federsteifigkeit und verhält sich damit wie eine gewöhnliche Feder. In der einen bzw. anderen Auslenkungsrichtung wird der Nulldurchgang 21, 22 erreicht. Dann ist die innere Baugruppe 10 gegenüber der äußeren Baugruppe 12 genau um die Längenausdehnung der Ringmagnete 14, 14' in Bewegungsrichtung 13 in die eine bzw. die andere Richtung versetzt, so daß sich dann wieder die Weicheisenzwischenstücke 15, 15' der inneren und äußeren Baugruppe 10, 12 genau gegenüber stehen, wobei dann die Anzugskraft ungleichnamiger Pole jeweils zu einer stabilen Gleichgewichtslage führt.

Die Kombination der Magnetfeder 9 mit einer gewöhnlichen Feder mit positiver Federsteifigkeit führt zu Federsystemen, die eine nichtlineare Kennlinie besitzen. Diese Systeme zeichnen sich dadurch aus, daß in der Nähe des Arbeitspunktes ein sehr weiches Federungsverhalten auftritt und bei größeren Auslenkungen sowohl in der einen als auch in der anderen Richtung die Federkraft stark zunimmt. Eine Anpassung an unterschiedliche Federungsaufgaben des Gesamtsystems läßt sich durch Verändern der nichtlinearen Kennlinie der Magnetfeder 9 erreichen. Eine Änderung der Federsteifigkeit der Magnetfeder 9 ergibt sich durch Veränderung des positiven Maximums 24 bzw. des negativen Maximums 25. Dies kann beispielsweise durch Anbringen eines magnetischen Kurzschlusses am Außenumfang der erreicht werden.

Der magnetische Kurzschluß wird durch ein Material mit niedrigem magnetischen Widerstand realisiert, welches die Weicheisenzwischenstücke 15 der äußeren Baugruppe 12 am Außenumfang der Magnetfeder 9 miteinander verbindet. Mit diesem Kurzschlußpfad wird das Magnetfeld in den Luftspalten 16 verringert und damit die Magnetkraft geschwächt. Das magnetische Kurzschlußmaterial besteht aus Weicheisen, das beispielsweise als Rollen 60 ausgebildet ist, von denen eine mehr oder weniger große Anzahl in unmittelbare Nähe des Außenumfangs der Magnetfeder 9 gebracht wird. Diese Rollen 60 sind lediglich in den Figuren 10 und 11 gezeigt, in den Figuren 3 bis 9 sind sie der besseren Übersichtlichkeit wegen jedoch weggelassen.

Die Rollen 60 befinden sich in einer Vorrichtung, die in Draufsicht in Figur 3 dargestellt ist. Der Zylinder 30 weist drei Führungen 31 bis 33 auf, in denen die Rollen 60 geführt werden. Die Führungen 31 bis 33 weisen in ihrem Verlauf eine Abkröpfung auf, so daß etwa die Hälfte einer Führung 31 bis 33 unmittelbar der Magnetfeder 9 benachbart ist und etwa die Hälfte eine Führung 31 bis 33 sich in einem gewissen Abstand zur Magnetfeder 9 befindet. Der Abstand des von der Magnetfeder 9 etwas entfernten Teils der Führungen 31 bis 33 beträgt einige Millimeter. Der entstehende Luftspalt von einigen Millimetern reicht bereits aus, daß keine magnetische Kurzschlußwirkung mehr auftritt. Die Aufteilung in drei Führungen 31 bis 33 ist willkürlich und es können auch andere Aufteilungen vorgesehen sein. Es ist jedoch auf eine symmetrische Anordnung um die Magnetfeder 9 herum zu achten, da andernfalls eine stark ungleiche Belastung der Magnetfeder 9 auftritt. Die symmetrische Aufteilung ergibt eine gleichmäßige Veränderung der Feldlinien über die ganze Länge der Magnetfeder, so daß der charakteristische lineare Verlauf der resultierenden Federkraft im Arbeitsbereich in der Nähe des Nulldurchganges 21 erhalten bleibt. Die in Figur 3 gezeigte Gesamtlänge der drei Führungen 31 bis 33 ist willkürlich gewählt. Hier ist das Ende der einen Führung gleichzeitig der Beginn der nächsten Führung. Mit dieser Anordnung läßt sich etwa 50% des Außenumfangs der Magnetfeder 9 mit Rollen 60 belegen. Reicht die damit erzielte Kurzschlußwirkung nicht aus, so ist es ohne weiteres möglich, die Länge der Führungen 31 bis 33 so zu vergrößern, daß sie sich gegenseitig überlappen. Damit kann dann nahezu der gesamte Außenumfang mit Rollen 60 belegt werden.

Die Rollen 60 werden mittels des drehbaren Ringes 34 in den Führungen 31 bis 33 bewegt, der dazu Vorsprünge 35 bis 37 aufweist, welche in Durchbrüche 38 bis 40 des Zylinders 30 eingreifen.

Die Anordnung der Durchbrüche 38 bis 40 im Zylinder 30 geht aus den Figuren 4 und 5 hervor. In beiden Figuren sind die Führungen 31 bis 33 nicht eingezeichnet. Figur 4 zeigt eine Draufsicht auf den Zylinder 30 und Figur 5 zeigt die Vorderansicht des Zylinders 30, wobei nur sichtbare Linien eingezeichnet sind.

Die Figur 6 zeigt den Ring 34 in Draufsicht und Figur 7 zeigt ein Schnittbild des Ringes 34 gemäß der Schnittlinie VII–VII in Figur 6. Die Höhe 50 und die Breite 51 der Vorsprünge 35 bis 37 sind so bemessen, daß sie in die Durchbrüche 38 bis 40 im Zylinder 30 eingreifen können und in den Führungen 31 bis 33 im Zylinder 30 Platz finden. An diesen Vorsprüngen 35 bis 37 sind die Rollen 60 befestigt. Die Befestigung an den Vorsprüngen 35 bis 37 und der Rollen 60 untereinander erfolgt mittels einer Kette, eines Metallbandes oder eines Klebebandes. Mit den Vorsprüngen 35 bis 37 kann somit zur Bewegung der Rollen 60 neben einer Schub- auch eine Zugbewegung erfolgen.

Die Anordnungen der Führungen 31 bis 33 im Zylinder 30 geht aus den Figuren 8 und 9 hervor. In Figur 8 ist ein Schnittbild durch den Zylinder 30 gemäß der Schnittlinie VIII–VIII und in Figur 9 ein Schnittbild des Zylinders 30 gemäß der Schnittlinie IX–IX jeweils von Figur 3 gezeigt. Die Höhe der Führungen 31 bis 33 ist so bemessen, daß die gesamte Baulänge der Magnetfeder 9 am Außenumfang erfaßt wird, so daß die beiden am oberen und unteren Ende der Magnetfeder 9 liegenden Weicheisenzwischenstücke 15 der äußeren Baugruppe 12 in Kontakt mit den Rollen 60 kommen können. In beiden Figuren sind die Magnetfeder 9 und die Rollen 60 nicht eingezeichnet. In der rechten Bildhälfte der Figur 9 ist zu sehen, wie ein Vorsprung 35 des Ringes 34 in einen Durchbruch 38 des Zylinders 30 und eine Führung 31 eingreift.

Die Figuren 10 und 11 zeigen eine erste und zweite Stellung 61, 62 der Rollen 60, welche der minimal bzw. maximal einstellbaren Federsteifigkeit entsprechen. In der ersten Stellung 61 nach Figur 10 sind alle Rollen 60 von dem Außenumfang der Magnetfeder 9 entfernt. In dieser Stellung tritt die maximal mögliche Federsteifigkeit der Magnetfeder 9 auf. Eine Drehung des drehbaren Ringes 34 schiebt die Rollen 60 in die Führungen 31 bis 33 kontinuierlich näher an den Außenumfang der Magnetfeder 9. Die Endlage dieser Drehbewegung ist mit der zweiten Stellung 62 in Figur 11 erreicht. Jetzt ist die mit dieser Anordnung maximal mögliche Kurzschlußwirkung erreicht und die Federsteifigkeit der Magnetfeder 9 erreicht ihren Minimalwert.

Es ist nicht unbedingt erforderlich, daß das magnetisierbare Material 60 in Rollenform vorliegt; hier können auch Materialien mit rechteckigem Querschnitt verwendet werden, wobei sich dann noch eine geringfügig höhere Kurzschlußwirkung einstellt, weil die Luftspalte zwischen den einzelnen Rollen 60 geringer werden. Die Verwendung von Rollen weist hier jedoch den Vorteil auf, daß der Drehbewegung geringere Reibungskräfte entgegengesetzt werden. Im Idealfall treten nur magnetische Kräfte auf, die in der zweiten Stellung 62 ihren Maximalwert aufweisen. Eine schnelle Verstellmöglichkeit muß beispielsweise bei einem Federungssystem im Kraftfahrzeug gegeben sein, da hier eine rasche Anpassung an die unterschiedlichen Straßenverhältnisse erforderlich ist. Die Verstellung des drehbaren Ringes 34 erfolgt in diesem Fall mit Hilfe eines Elektromotors.

Die erfindungsgemäße Vorrichtung kann nicht nur am Außenumfang der Magnetfeder 9 vorgesehen sein, sie kann ebenso am Innenumfang, beispielsweise anstelle der Drehachse 11 in Figur 1, angeordnet sein.

**Patentansprüche**

1. Vorrichtung zur Verstellung der Federsteifigkeit einer Magnetfeder durch Veränderung des magnetischen Widerstandes des Magnetpfades der Magnetfeder, welche eine erste, vorzugsweise innere und eine zweite, vorzugsweise äußere Baugruppe aufweist, von denen eine mit dem gefederten Teil und die andere mit dem ungefederten Teil eines abzufedernden Systems verbunden ist, und die beiden Baugruppen Permanentmagnete aufweisen, zwischen welchen Weicheisenzwischenstücke angeordnet sind, dadurch gekennzeichnet, daß der magnetische Widerstand des Magnetpfades (15, 15') durch wenigstens einen verschiebbaren oder verdrehbaren magnetisierbaren Körper (60) veränderbar ist im Sinne einer Verringerung oder Erhöhung des magnetischen Flusses im Bereich eines Luftspaltes (16) zwischen der ersten (10) und der zweiten (12) Baugruppe.

2. Vorrichtung nach Anspruch 1, dadurch gekennzeichnet, daß mittels eines drehbaren Betätigungsgliedes (34) wenigstens ein magnetisierbarer Körper (60) zwischen einer ersten Stellung (61) und einer zweiten Stellung (62) bewegbar ist, wobei der magnetisierbare Körper (60) in der ersten Stellung (61) so positioniert ist, daß keine magnetische Kurzschlußwirkung mehr auftritt, während er in der zweiten Stellung (62) direkt an der ersten (10) und/oder direkt der zweiten Baugruppe (12) anliegt.

3. Vorrichtung nach Anspruch 1 oder 2, dadurch gekennzeichnet, daß ein Zylinder (30) wenigstens eine Führung (31 bis 33), vorzugsweise jedoch zwei oder mehr Führungen zur Aufnahme mehrerer magnetisierbarer Körper (60) aufweist, die in regelmäßigen Abständen am Außen- und Innenumfang einer zylindrischen Magnetfeder (9) angeordnet sind.

4. Vorrichtung nach einem der Ansprüche 1 bis 3, dadurch gekennzeichnet, daß im Zylinder (30) wenigstens ein Durchbruch (38 bis 40) vorgesehen ist und daß das als drehbarer Ring (34) ausgebildete Betätigungsglied wenigstens einen Vorsprung (35 bis 37) aufweist, der in den Durchbruch (38 bis 40) im Zylinder (30) eingreift.

5. Vorrichtung nach einem der Ansprüche 1 bis 4, dadurch gekennzeichnet, daß der magnetisierbare Körper (60) wenigstens ein zylindrischer Stab ist.

6. Vorrichtung nach einem der Ansprüche 1 bis 4, dadurch gekennzeichnet, daß der magnetisierbare Körper (60) wenigstens ein Stab mit rechteckigem Querschnitt ist.

7. Vorrichtung nach Anspruch 4, dadurch gekennzeichnet, daß mehrere magnetisierbare Körper (60) vorgesehen sind, die mit dem Vorsprung (35 bis 37) miteinander verbunden sind.

8. Vorrichtung nach einem der Ansprüche 1 bis 7, dadurch gekennzeichnet, daß der drehbare Ring (34) mittels eines Elektromotors verdrehbar ist.

## Revendications

1. Dispositif de réglage de la rigidité d'un ressort magnétique par variation de la résistance magnétique de la piste magnétique qui comporte un premier sous ensemble, de préférence intérieur et un second sous ensemble de préférence extérieur dont l'un est relié à une partie amortie et l'autre à une partie non amortie, et les deux sous ensembles comportent des aimants permanents entre lesquels sont placés des pièces intermédiaires de fer doux, caractérisé en ce que la résistance magnétique de la piste magnétique (15, 15') peut être modifiée par au moins un corps (60) mobile ou rotatif magnétisable dans le sens d'une diminution ou d'une augmentation du flux magnétique dans la zone d'un entrefer 16 entre le premier (10) et le second sous ensemble (12).

2. Dispositif selon la revendication (1), caractérisé en ce qu'au moyen d'un élément d'actionnement (34) rotatif on peut déplacer au moins un corps magnétisable (60) entre une première position (61) et une seconde position (62), le corps magnétisable (60) étant dans la première position (61) disposé de façon telle, qu'aucun court-circuit magnétique ne puisse plus survenir tandis que dans la seconde position (62) il repose directement sur le premier sous ensemble (10) et/ou directement sur le second sous ensemble (12).

3. Dispositif selon la revendication (1 ou 2), caractérisé en ce qu'un cylindre (30) comporte au moins un guidage (31 à 33) avantageusement au moins deux guidages, pour recevoir plusieurs corps magnétisables (60), qui sont disposés à intervalles réguliers aux périphéries intérieure et extérieure d'un ressort magnétique cylindrique (9).

4. Dispositif selon l'une des revendications (1 à 3), caractérisé en ce que dans le cylindre (30) est prévue au moins une ouverture (38 à 40) et que l'élément d'actionnement sous forme d'une bague annulaire comporte au moins une saillie (35 à 37) qui s'engage par l'ouverture (38 à 40) dans le cylindre (30).

5. Dispositif selon l'une des revendications (1 à 4), caractérisé en ce que le corps magnétique (60) est au moins un barreau cylindrique.

6. Dispositif selon l'une des revendications (1 à 4), caractérisé ou ce que le corps magnétisable (60) est au moins un barreau de section rectangulaire.

7. Dispositif selon l'une des revendications (1 à 4), caractérisé en ce que plusieurs corps magnétisables sont prévus et sont reliés les uns et les autres aux saillies (35 à 37).

8. Dispositif selon l'une des revendications (1 à 7), caractérisé en ce qu'on peut faire tourner la bague rotative (34) au moyen d'un moteur électrique.

## Claims

1. Device for adjusting the stiffness of a magnetic spring by altering the magnetic resistance of the magnetic path of the magnetic spring, which has a first, preferably inner, and a second, preferably outer sub-assembly, of which one is connected to the sprung part and the other to the unsprung part of a system to be cushioned, and the two subassemblies have permanent magnets between which soft iron separators are arranged, characterized in that the magnetic resistance of the magnetic path (15, 15') can be altered by at least one displaceable or rotatable magnetizable body (60) so as to reduce or increase the magnetic flux in the region of an air gap (16) between the first (10) and the second (12) subassembly.

2. Device according to Claim 1, characterized in that at least one magnetizable body (60) can be moved between a first position (61) and a second position (62) by means of a rotatable control member (34), and, in the first position (61), the magnetizable body (60) is positioned so that a magnetic short-circuiting effect no longer occurs while, in the second position (62) it rests directly on the first (10) and/or directly on the second subassembly (12).

3. Device according to Claim 1 or 2, characterized in that a cylinder (30) has at least one guide (31 to 33), but preferably has two or more guides for accommodating a plurality of magnetizable bodies (60) wich are arranged at regular intervals at the outer and inner periphery of a cylindrical magnetic spring (9).

4. Device according to one of Claims 1 to 3, characterized in that at least one perforation (38 to 40) is provided in the cylinder (30), and in that the controlling member, which is designed as a rotatable ring (34), has at least one projection (35 to 37) which engages in the perforation (38 to 40) in the cylinder (30).

5. Device according to one of Claims 1 to 4, characterized in that the magnetizable body (60) is at least one cylindrical rod.

6. Device according to one of Claims 1 to 4, characterized in that the magnetizable body (60) is at least one rod of rectangular cross-section.

7. Device according to Claim 4, characterized in that a plurality of magnetizable bodies (60) are provided which are connected together with the projection (35 to 37).

8. Device according to one of Claims 1 to 7, characterized in that the rotatable ring (34) can be rotated by means of an electric motor.

Fig. 1

Fig. 2

Fig. 3

Fig. 8

## Fig. 4

## Fig. 5

## Fig. 6

## Fig.7

Fig. 9

Fig. 10

Fig. 11